# EUROPÄISCHE PATENTANMELDUNG

(11) **EP 2 386 470 A1**
(43) Veröffentlichungstag der Anmeldung: **16.11.2011**
(21) Anmeldenummer: 11003679.5
(22) Anmeldetag: 05.05.2011
(51) Int. Cl.: B62K 5/00, B66F 9/20, H01H 11/00, A61G 5/04

(54) **Bedieneinheit für elektromotisch angetriebene Fahrzeuge, insbesondere Zugeinheit oder Schiebehilfe für einen Rollstuhl oder Flurförderfahrzeug**

(30) Priorität: 10.05.2010 DE 102010020318
(71) Anmelder: Otto Bock Mobility Solutions GmbH, 07426 Königsee (DE)
(72) Erfinder: Perk, Heinrich, 74858 Aglasterhausen (DE); Kretschmer, Oliver, 74889 Sinsheim/Düren (DE); Höhn, Brian, 74918 Angelbachtal (DE)
(74) Vertreter: Rehmann, Thorsten

(57) **Zusammenfassung**

Die Erfindung betrifft eine Bedieneinheit (10) für elektromotorisch angetriebene Fahrzeuge, mit einem Gehäuse (1) zur Aufnahme der mechanischen Bauteile der Steuerungselektronik, mindestens einem am Gehäuse (1) angeordneten und relativ zu diesem verschwenkbaren Betätigungselement (2a, 2b), das auf einer im Gehäuse (1) gelagerten Hohlwelle (11) angeordnet ist und das von der Hohlwelle (11) werkzeuglos so lösbar ist, dass seine Lage auf der Hohlwelle (11) durch Verdrehen des Betätigungselementes (2a, 2b) veränderbar ist.

## Beschreibung

Die Erfindung betrifft eine Bedieneinheit für elektromotorisch angetriebene Fahrzeuge, insbesondere für eine Zugeinheit oder eine Schiebehilfe für einen Rollstuhl oder für ein Flurförderfahrzeug.

Aus der DE 10 2006 016 568 B4 ist eine Schiebehilfe für einen Rollstuhl bekannt, die mindestens ein elektromotorisch angetriebenes Antriebsrad und einen Lenker zur Einleitung von Lenkvorgängen aufweist. Über eine am Lenker befestigte Bedienungseinrichtung ist der Antriebsmotor der Schiebehilfe ansteuerbar, wobei die Bedienungsrichtung durch Verschwenken des Lenkers betätigbar ist. Diese Bedienungseinrichtung ist so ausgelegt, dass bei Verschwenken des Lenkers nach unten der Antriebsmotor für Vorwärtsfahrt angesteuert wird. Die Schiebehilfe wird von der Rückseite des Rollstuhles mit diesem gekoppelt und kann dann von einer Begleitperson betätigt werden. Grundsätzlich kann eine solche Schiebehilfe auch als Zughilfe verwendet werden. Sie wird dann nicht hinten an den Rollstuhl angekoppelt, sondern vorne. Der Rollstuhl kann dann von der in ihm sitzenden Person fremdkraftbetätigt gefahren werden.

Eine Zugeinheit für einen Rollstuhl ist beispielsweise in der US 7,117,967 B2 offenbart.

Aus der DE 20 2007 001 486 U1 ist ein modulares Kupplungssystem zur wahlweise Ankupplung einer Antriebs- und/oder Lenkeinheit an einen Rollstuhl bekannt.

Zugeinrichtungen und Schiebehilfen sind dazu vorgesehen, mit einem herkömmlichen Rollstuhl verwendet zu werden, an deren Antriebsrädern zwei äußere Greifringe vorgesehen sind, mit denen der Rollstuhl vorwärts oder rückwärts mittels Armkraft bewegt werden kann. Für diese Antriebsart sind beide Hände des Fahrers erforderlich. Insbesondere bei größeren Wegstrecken kann der Antrieb über die Greifringe für den Rollstuhlfahrer oder eine Person, die den Rollstuhl schiebt, sehr anstrengend sein, sodass elektrische Antriebshilfen zur Fortbewegung von Rollstühlen entwickelt worden sind.

Aus der DE 101 41 566 C1 ist eine Bedieneinheit für eine Antriebsvorrichtung zum Antreiben eines Beförderungsmittels, insbesondere eines elektrisch antreibbaren Rollstuhles, bekannt. Diese Bedieneinheit ist mit einem Betätigungselement versehen, das einen Betätigungsweg mit mindestens zwei vorbestimmten Betriebsstellungen aufweist, wobei bei einer ersten Betriebsstellung die Antriebsleistung der Antriebsvorrichtung gleich null ist und bei Erreichen einer zweiten vorbestimmten Betriebsstellung ein Maximalwert erreicht wird. Wird das Betätigungselement über die zweite vorbestimmte Betriebsstellung hinaus betätigt, wird die Antriebsleistung der Antriebsvorrichtung verändert, wobei zum Überschreiten der zweiten vorbestimmten Betriebsstellung ein Übersteigen einer vorbestimmten Betätigungskraft erforderlich ist.

Die DE 202 21 073 U1 offenbart eine Schiebehilfe für einen Rollstuhl, die ein Bedienungselement mit einem Betätigungselement aufweist, das sich in nicht betätigen Zustand in einer Nullstellung befindet. In dieser Nullstellung ist die Antriebsleistung der Schiebehilfe gleich null. Wird das Betätigungselement entgegen einer Federkraft betätigt, steigt die Antriebsleistung mit zunehmendem Betätigungsweg an. Wenn der vollständige Betätigungsweg ausgenutzt wird, das heißt, dass das Betätigungselement an einem Anschlag angelangt ist, wirddie maximale Antriebsleistung bereitgestellt.

In der DE 10 2004 005 762 A1 wird ein Deichselkopf für einen Flurförderer beschrieben, der eine Bedieneinheit mit einer Mehrzahl von Modi aufweist, wobei mindestens ein Stellrad mit einem Proportionalschalter verbunden ist und der Proportionalschalter unter anderem auch mit einer Fahrbetriebssteuerung verbindbar ist. Die Fahrbetriebssteuerung dient dabei zur Steuerung einer Bewegung des Flurförderers selbst in der Umgebung. Über eine Hubsteuerung folgt ein kontrolliertes Heben und Senken der Lastaufnahmemittel.

Verschwenkbare Anzeigeeinheiten für Computer oder sonstige elektronische Bauteile sind beispielsweise bekannt aus der DE 90 11 684 U1, der EP 0 535 912 A2 oder der US 2008/0137276 A1.

Ein Flurförderer, eine sogenannte "Ameise", wird von unterschiedlichen Personen in einer Produktionsstätte bedient. Wird die Schiebehilfe für einen Rollstuhl von unterschiedlichen Personen benutzt oder wird die Schiebehilfe auch als Zugeinheit verwendet, muss die Bedieneinheit bzw. müssen die Betätigungselemente an die Ergonomie unterschiedlicher Personen angepasst werden, was nicht nur deshalb mühsam ist, weil hierzu Werkzeug notwendig ist.

Von dieser Problemstellung ausgehend soll eine Bedieneinheit für elektromotorisch angtriebene Fahrzeuge so verbessert werden, dass ihre Einstellung an unterschiedliche Benutzer oder Führer des Fahrzeuges leicht angepasst werden kann.

Zur Problemlösung ist die Bedieneinheit mit einem Gehäuse zur Aufnahme der mechanischen Bauteile der Steuerungselektronik oder dergleichen und mindestens einem am Gehäuse angeordneten und relativ zu diesem verschwenkbaren Betätigungselement versehen, das auf einer im Gehäuse gelagerten Hohlwelle angeordnet ist, und dass von der Hohlwelle werkzeuglos so lösbar ist, dass seine Lage auf der Hohlwelle durch Verdrehen des Betätigungselementes veränderbar ist.

Durch diese Ausgestaltung ist die relative Lage des Gehäuses, also des Kernes der Bedieneinheit von der relativen Lage des oder der Betätigungselemente unabhängig, sodass die Anordnung des Betätigungselementes von dem jeweiligen Benutzer optimal auf seine Anforderungen hin eingestellt werden kann.

Das mindestens eine Betätigungselement ist vorzugsweise seitlich am Gehäuse angeordnet.

Vorteilhafterweise sind zwei Betätigungselemente vorgesehen, die identisch bzw. spiegelbildlich ausgebildet sind und beidseitig seitlich am Gehäuse auf je einer Hohlwelle angeordnet werden können.

Die beiden Hohlwellen sind dann vorzugsweise miteinander gekoppelt, so dass die Betätigung nur eines Betätigungselementes auf das andere übertragen wird.

Um das Betätigungselement einfach von der Hohlwelle lösen zu können, ist die Hohlwelle vorzugsweise mit einer Außenverzahnung und das Betätigungselement mit einer hierzu korrespondierenden Innenverzahnung versehen. Durch diese Ausgestaltung kann das Betätigungselement axial auf der Hohlwelle verschoben werden, bis die Außenverzahnung und die Innenverzahnung außer Eingriff gelangen. Dann kann das Betätigungselement, da es nicht mehr drehfest mit der Hohlwelle verbunden ist, verschwenkt werden und wenn die gewünschte Position des Bedienelementes erreicht ist, auf die Außenverzahnung der Hohlwelle zurückgeschoben werden.

Um das Zurückschieben des Betätigungselements zu vereinfachen, erfolgt die axiale Verschiebung des Betätigungselementes vorzugsweise gegen die Kraft einer Feder, die dabei gespannt wird, sodass die Feder bei ihrer Entlastung das Betätigungselement auf die Außenverzahnung der Hohlwelle zurückschiebt.

Zur einfachen Befestigung der Bedieneinheit an der Deichsel der Zug-/ Schubhilfe oder des Flurförderfahrzeuges sind an der Unterseite des Gehäuses Mittel zum Festklemmen vorgesehen. Vorzugsweise wird die Bedieneinheit auf einem Rohr, nämlich einem Lenker, wie er beispielsweise von Fahrrädern bekannt ist, festgeklemmt.

Mit Hilfe einer Zeichnung soll ein Ausführungsbeispiel der Erfindung nachfolgend näher beschrieben werden.

Es zeigt:
- Figur 1 -: die Bedieneinheit in einer ersten perspektivischen Ansicht;
- Figur 2 -: die vergrößerte Darstellung des Ausschnitts 11 nach Figur 1;
- Figur 3 -: die Bedieneinheit in einer zweiten perspektivischen Ansicht;
- Figur 4 -: die vergrößerte Darstellung des Ausschnitts IV nach Figur 3;
- Figur 5 -: die auf der Deichsel angebrachte Bedieneinheit von der Vorderseite in perspektivischer Darstellung;

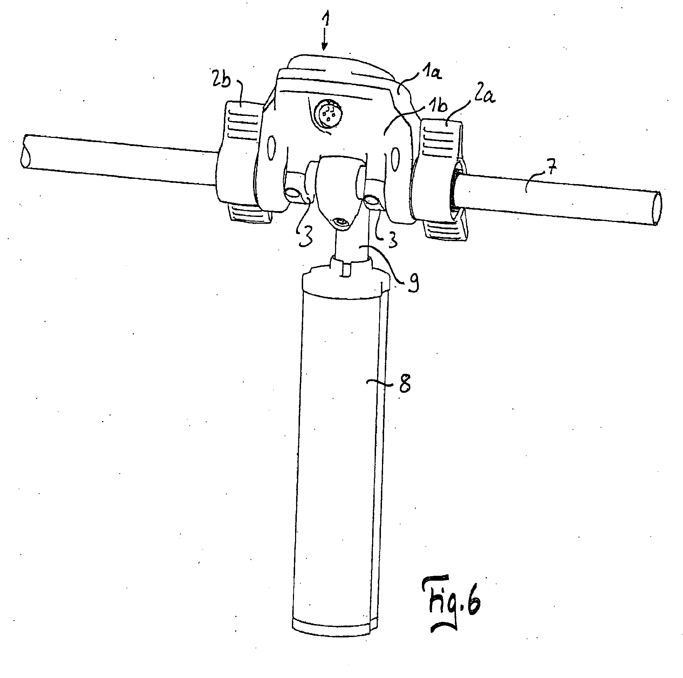

- Figur 6 -: die auf der Deichsel angebrachte Bedieneinheit von der Rückseite in perspektivischer Darstellung;

Die Bedieneinheit 10 besteht aus dem geschlossenen Kunststoffgehäuse 1, das an seiner Oberseite 1a mit einer Mehrzahl hier nicht näher bezeichneten Öffnungen versehen ist, um Schaltelemente und/oder Kontrolllampen sowie eine Anzeigeeinrichtung unterzubringen. Das Gehäuse 1 ist zweiteilig ausgebildet, sodass die Oberseite 1a von der Unterseite 1b getrennt werden kann.

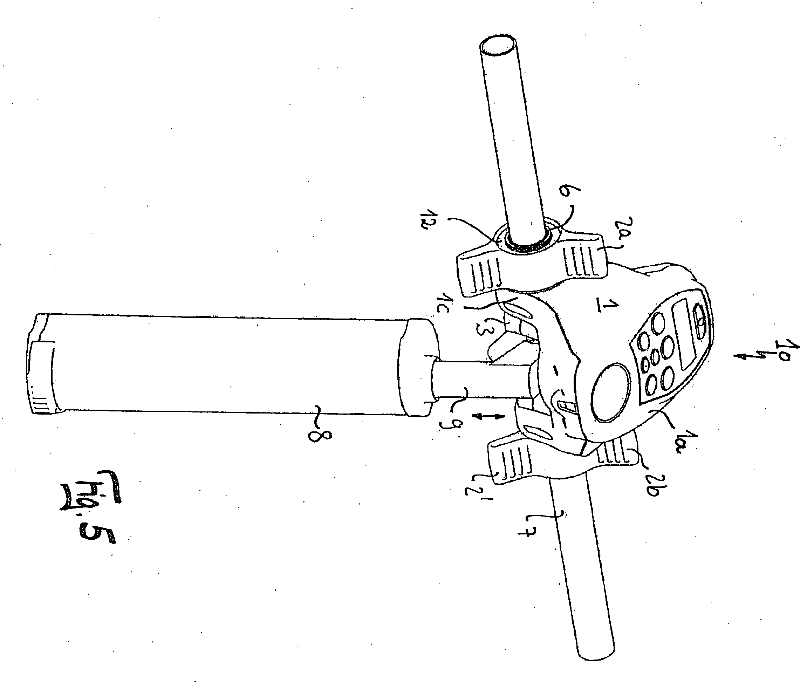

Über an der Unterseite 1 b vorgesehene Klemmelemente 3 ist die Bedieneinheit 10 auf dem den Lenker bildenden Rohr 7 festgeklemmt. Über einen Vorbau 9, wie er beispielsweise aus dem Fahrradbau bekannt ist, ist das Lenkrohr 7 mit der Deichsel 8 verbunden und stufenlos in der Höhe einstellbar, wie in Figur 5 durch den Doppelpfeil angedeutet ist. Die Bedieneinheit 10 kann für diverse Fahrzeuge verwendet werden. Ihr bevorzugter Einsatz ist für eine Schiebehilfe oder eine Zughilfe für einen Rollstuhl. Denkbar ist auch, dass durch Umstecken der Deichsel 8 eine kombinierte Zug-Schiebehilfe für einen Rollstuhl eingesetzt wird. Ebenso kann die Bedieneinheit 10 für einen Elektrorollstuhl oder für ein Flurförderfahrzeug, eine sogenannte Ameise, Verwendung finden.

In den beiden nach unten geführten Schenkel 1c des Gehäuses 1 ist je eine Hohlwelle 11 verdrehbar gelagert, die an ihrem gehäuseseitigen Ende mit einer Außenverzahnung 4 versehen ist. Am gegenüberliegenden Ende der Hohlwelle 11 ist ein ringförmiger Anschlag 12 vorgesehen, der mittels eines Sprengringes 6 axial auf der Hohlwelle 11 befestigt ist. Die beiden Hohlwellen 11 sind im inneren des Gehäuses 1 über einen nicht dargestellten Bügel miteinander starr gekoppelt, sodass eine Schwenkbewegung der einen Hohlwelle 11 auf die gegenüberliegende Hohlwelle 11 übertragen wird.

Die flügelförmigen Betätigungselemente 2a, 2b sind mit einer zu der Außenverzahnung 4 der Hohlwelle 11 korrespondierenden Innenverzahnung 5 versehen. Gegen die Kraft einer nicht gezeigten Feder können die auf die Hohlwelle 11 aufgesetzten Betätigungselemente 2a, 2b in axialer Richtung bis gegen den Anschlag 12 (vgl. Figur 5) verschoben werden. Wenn die Betätigungselemente 2a, 2b an dem ihnen jeweils zugeordneten Anschlag 12 anliegen, ist ihre Innenverzahnung 5 außer Eingriff mit der Außenverzahnung 4, der Hohlwelle 11 und die Betätigungselemente 2a, 2b sind in jede Richtung in Bezug zum Lenkrohr 7 frei drehbar. Dadurch können die Betätigungselemente 2a, 2b so eingestellt werden, dass sie für den Benutzer optimal angeordnet sind, nachdem zuvor die Bedieneinheit auf dem Rohr 7 so fixiert worden ist, dass sie optimal im Blickfeld eines Benutzers liegt. Die Anzahl der Zähne der Verzahnung 4, 5 bestimmt, den kleinsten Winkel, um den die Bedienelemente 2a, 2b gegenüber dem Gehäuse 1 verdreht und wieder fixiert werden können.

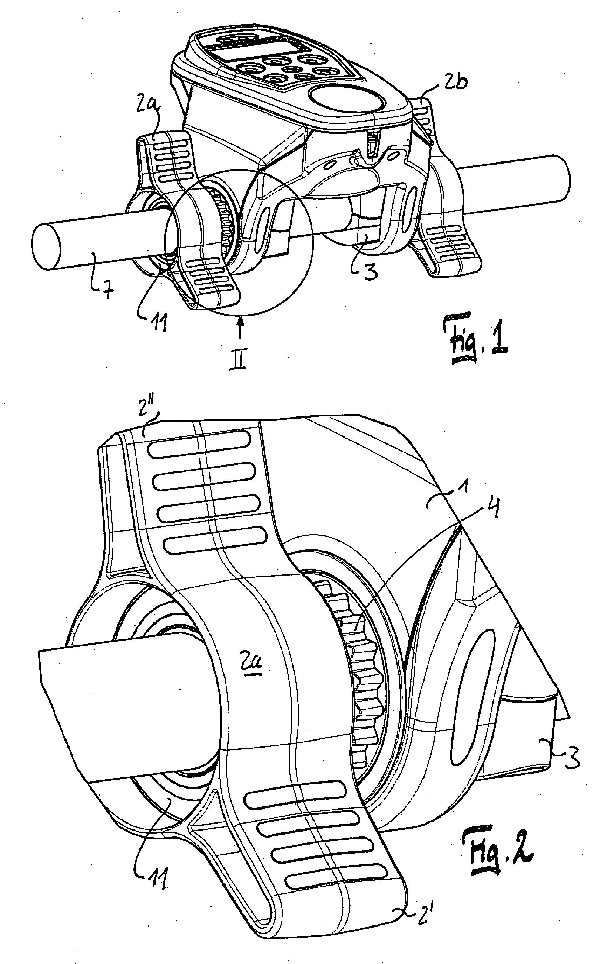

Über die Betätigungselemente 2a, 2b wird beispielsweise die Geschwindigkeit und die Fahrrichtung des Fahrzeugs vorgegeben. Wird eines der Betätigungselemente 2a oder 2b von der Bedienperson mit dem Daumen nach vorne gedreht, verschwenkten sich die miteinander gekoppelten Hohlwellen 11, die mit einem im Gehäuse 1 angeordneten Potentiometer verbunden sind und entsprechend der Drehwinkellage nimmt das Fahrzeug fahrt in Vorwärtsrichtung auf. Werden die Betätigungselemente 2a, 2b nach unten (vgl. Figur 1) gedrückt, nimmt das Fahrzeug entsprechend dem eingestellten Drehwinkel Geschwindigkeit zur Rückwärtsfahrt auf. Die beiden Flügel 2', 2" der Betätigungselemente 2a, 2b sind in einem Winkel von etwa 160° zueinander angeordnet.

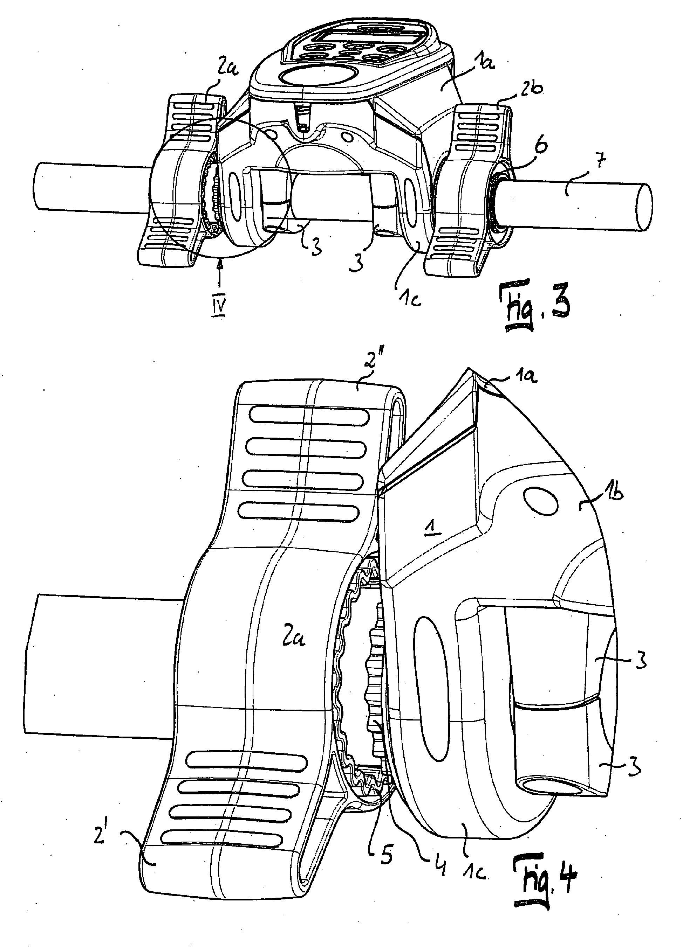

Die Bedieneinheit 10 einschließlich der Hohlwellen 11 und der Bedienhebel 2a, 2b ist vorzugsweise aus Kunststoff gefertigt. Die beiden Gehäusehälften 1a, 1b werden miteinander verschraubt. Zwischen der Hohlwelle 11 und dem jeweils auf dieser axial verschiebbar angeordneten Betätigungselemente 2a, 2b ist eine Feder angeordnet, die gespannt wird, wenn die Betätigungshebel 2a, 2b außer Eingriff mit der Außenverzahnung 4 der Hohlwelle 11 gelangen, sodass sichergestellt ist, dass die Betätigungselemente 2a, 2b selbsttätig zurückgeführt werden, wenn die Verzahnungen 4, 5 zur Überdeckung gelangen und die Betätigungselemente 2a, 2b losgelassen werden. Die Betätigungselemente sind in ihrer Winkelstellung zum Gehäuse 1 voneinander unabhängig einstellbar, wie den Figuren 2 und 4 entnehmbar ist. Nur die Hohlwellen 11 sind mechanisch miteinander gekoppelt.

Die Bedieneinheit kann für eine Zug-/ oder Schubhilfe für einen Rollstuhl oder aber auch für eine Flurförderfahrzeug, beispielsweise eine "Ameise" verwendet werden.

### Bezugszeichenliste

- 1: Gehäuse
- 1 a: Oberteil 1b Unterteil
- 1 c: Schenkel
- 2a: Betätigungselement
- 2b: Betätigungselement
- 2': Flügel
- 2": Flügel
- 3: Klemmelement
- 4: Außenverzahnung
- 5: Innenverzahnung
- 6: Sprengring
- 7: Rohr/Lenkrohr
- 8: Deichsel
- 9: Vorbau
- 10: Bedieneinheit
- 11: Hohlwelle
- 12: Anschlag

## Patentansprüche

1. Bedieneinheit (10) für elektromotorisch angetriebene Fahrzeuge, mit einem Gehäuse (1) zur Aufnahme der mechanischen Bauteile der Steuerungselektronik, mindestens einem am Gehäuse (1) angeordneten und relativ zu diesem verschwenkbaren Betätigungselement (2a, 2b), das auf einer im Gehäuse (1) gelagerten Hohlwelle (11) angeordnet ist und das von der Hohlwelle (11) werkzeuglos so lösbar ist, dass seine Lage auf der Hohlwelle (11) durch Verdrehen des Betätigungselementes (2a, 2b) veränderbar ist.

2. Bedieneinheit (10) nach Anspruch 1, **dadurch gekennzeichnet, dass** das mindestens eine Betätigungselement (2a, 2b) seitlich am Gehäuse (1) angeordnet ist.

3. Bedieneinheit (10) nach Anspruch 1 oder 2, **dadurch gekennzeichnet, dass** zwei Betätigungselemente (2a, 2b) vorgesehen sind.

4. Bedieneinheit (10) nach einem der vorstehenden Ansprüche, **dadurch gekennzeichnet, dass** die Hohlwelle (11) mit einer Außenverzahnung (4) und das Betätigungselement (2a, 2b) mit einer hierzu korrespondierenden Innenverzahnung (5) versehen ist.

5. Bedieneinheit (10) nach einem der vorstehenden Ansprüche, **dadurch gekennzeichnet, dass** das Betätigungselement (2a, 2b) auf der Hohlwelle (11) axial verschiebbar angeordnet ist.

6. Bedieneinheit (10) nach Anspruch 4 und 5, **dadurch gekennzeichnet, dass** das Betätigungselement (2a, 2b) so weit axial auf der Hohlwelle (11) verschiebbar ist, dass die Außenverzahnung (4) und die Innenverzahnung (5) außer Eingriff gelangen.

7. Bedieneinheit (10) nach Anspruch 3, **dadurch gekennzeichnet, dass** die Betätigungselemente (2a, 2b) symmetrisch ausgebildet sind.

8. Bedieneinheit (10) nach Anspruch 3 oder 7, **dadurch gekennzeichnet, dass** die Betätigungselemente (2a, 2b) beidseitig seitlich am Gehäuse (1) angeordnet sind.

9. Bedieneinheit (10) nach einem der Ansprüche 3 bis 8, **dadurch gekennzeichnet, dass** jedes Betätigungselement (2a, 2b) auf einer Hohlwelle (11) angeordnet ist.

10. Bedieneinheit (10) nach Anspruch 9, **dadurch gekennzeichnet, dass** die beiden Hohlwellen (11) mechanisch miteinander gekoppelt sind.

11. Bedieneinheit (10) nach Anspruch 2 oder 3, **dadurch gekennzeichnet, dass** das Betätigungselement (2a, 2b) flügelförmig ausgebildet ist und der Abstand der Flügel (2', 2") 160° beträgt.

12. Bedieneinheit (10) nach Anspruch 5, **dadurch gekennzeichnet, dass** das Betätigungselement (2a, 2b) gegen die Kraft einer Feder verschiebbar ist.

13. Bedieneinheit (10) nach einem der vorstehenden Ansprüche, **dadurch gekennzeichnet, dass** auf der Unterseite (1b) des Gehäuses (1) Mittel zum Festklemmen auf einem Rohr (7), insbesondere einem Lenkrohr, vorgesehen sind.

14. Elektromotorisch angetriebenes Fahrzeug mit einer Bedieneinheit (10) nach einem der vorstehenden Ansprüche.

15. Elektromotorisch angetriebenes Fahrzeug nach Anspruch 11, **dadurch gekennzeichnet, dass** das Fahrzeug eine Zugeinheit und/oder Schiebehilfe für einen Rollstuhl ist.

16. Elektromotorisch angetriebenes Fahrzeug nach Anspruch 11, **dadurch gekennzeichnet, dass** das Fahrzeug ein Flurförderfahrzeug ist.
